# EUROPEAN PATENT APPLICATION

(11) **EP 3 001 025 A1**
(43) Date of publication of application: **30.03.2016**
(21) Application number: 14186513.9
(22) Date of filing: 26.09.2014
(51) Int. Cl.: F02M 57/02, F02M 59/10, F02B 3/02, F02M 21/02, F02B 19/12

(54) **Gaseous fuel internal combustion engine with high-pressure fuel pump**

(71) Applicant: Caterpillar Motoren GmbH & Co. KG, 24159 Kiel (DE)
(72) Inventor: Sixel, Eike Joachim, 24109 Kiel (DE); Holst, Hauke, 24161 Altenholz (DE)
(74) Representative: Kramer Barske Schmidtchen Patentanwälte PartG mbB

(57) **Abstract**

The present disclosure relates to a gaseous fuel internal combustion engine (10) comprising a plurality of cylinders (14) movably accommodating a piston (16) operably connected to a crankshaft (22). Each cylinder (14) of the plurality of cylinders (14) may define with the associated piston (16) a combustion chamber (26) for combusting an air/fuel mixture therein. The gaseous fuel internal combustion engine (10) may further comprise at least one camshaft (56) operably coupled to the crankshaft (22) and including a plurality of cam lobes (58), and at least one high-pressure fuel pump (70) associated with one of the combustion chambers (26) and operably coupled to an associated cam lobe (58) of the at least one camshaft (56). The at least one high-pressure fuel pump (70) may be configured to pressurize gaseous fuel to a preset pressure and supply the pressurized gaseous fuel to the associated combustion chamber (26).

## Description

### Technical Field

The present disclosure generally relates to a gaseous fuel internal combustion engine, particularly to a gaseous fuel internal combustion engine having at least one high-pressure fuel pump, and a related method for operating gaseous fuel internal combustion engines.

### Background

A known problem of operating an internal combustion engine is the generation of harmful nitrogen oxides. Those nitrogen oxides may form during combustion as a result of high peak combustion temperatures. Accordingly, reducing the peak combustion temperatures during combustion may generally reduce the formation of nitrogen oxides. For this reason, lean air fuel mixtures such as lean gaseous fuel air mixtures are used. A lean air fuel mixture has a relatively large air-to-fuel ratio compared to a fuel mixture having stoichiometric air-to-fuel ratio.

Operating an internal combustion engine with a relatively large air to fuel ratio (lean mixture) may result in an incomplete combustion within the main combustion chamber due to the relatively slow rate of flame propagation from a single point ignition source, such as a spark plug. Furthermore, a poor ignitability may result from the lean mixture. Particularly, large-bore engines may suffer from those effects.

To improve the ignitability of lean burn gaseous fuel internal combustion engines, the same may be provided with pre-chambers (also referred to as pre-combustion chambers). For example, such a pre-chamber may be fluidly connected to a main combustion chamber of a respective cylinder, for example, by a plurality of flow transfer passages, but at least one. Those flow transfer passages allow flow of a lean mixture of gaseous fuel and air from the main combustion chamber into the pre-chamber during a compression stroke. Enrichment of the lean mixture in the pre-chamber is typically effected by providing a small quantity of gaseous fuel into the pre-chamber via a separate gas feed passage. The enriched mixture is ignited in the pre-chamber by an igniter such as a spark plug. Ignition of the enriched mixture causes a flame front of hot gases that propagates from the pre-chamber via the flow transfer passages into the main combustion chamber. Thus, the lean mixture in the main combustion chamber ignites and burns, and, thereby, expands against a movable piston that drives a crankshaft.

In conventional gaseous fuel internal combustion engines, it may be desired to enrich an ignition region with fuel, preferably shortly prior initiated the ignition event. As the ignition event is commonly initiated shortly prior the piston reaches its top dead center, the pressure of the supplied pressurized fuel for enriching the ignition region with fuel may need to be greater than the actual compressing pressure of the air/fuel mixture within the combustion chamber.

The present disclosure is directed, at least in part, to improving or overcoming one or more aspects of prior systems.

### Summary of the Disclosure

According to an aspect of the present disclosure, a gaseous fuel internal combustion engine may comprise a plurality of cylinders movably accommodating a piston operably connected to a crankshaft. Each cylinder of the plurality of cylinders may define with the associated piston a combustion chamber for combusting an air/fuel mixture therein. The disclosed gaseous fuel internal combustion engine may further comprise at least one camshaft operably coupled to the crankshaft and including a plurality of cam lobes, and at least one high-pressure fuel pump associated with one of the combustion chambers and operably coupled to an associated cam lobe of the at least one camshaft. The at least one high-pressure fuel pump may be configured to pressurize gaseous fuel to a preset pressure and supply the pressurized gaseous fuel to the associated combustion chamber.

According to another aspect of the present disclosure, a method for operating a gaseous fuel internal combustion engine is disclosed. The gaseous fuel internal combustion engine may include a plurality of cylinders and a plurality of pistons operably connected to a crankshaft and reciprocally accommodated within the plurality of cylinders. The plurality of cylinders and the plurality of pistons may respectively define a combustion chamber for combusting an air/fuel mixture therein. The gaseous fuel internal combustion engine may further include at least one camshaft operably coupled to the crankshaft and including a plurality of cam lobes. The disclosed method may comprise operating the internal combustion engine thereby driving the crankshaft and the at least one camshaft, and actuating and operating at least one high-pressure fuel pump engaging an associated cam lobe by rotational movement of the at least one camshaft, thereby pressurizing gaseous fuel to a preset pressure.

Other features and aspects of this disclosure will be apparent from the following description and the accompanying drawings.

### Brief Description of the Drawings

Fig. 1 is a diagrammatic cross-sectional view of an exemplary disclosed gaseous fuel internal combustion engine including at least one camshaft actuated high-pressure fuel pump;
Fig. 2 illustrates a schematic view of a camshaft actuated high-pressure fuel pump with a first embodiments of a transmission device disposed between the camshaft and the high-pressure fuel pump; and
Fig. 3 illustrates a schematic view of a camshaft actuated high-pressure fuel pump with a further embodiment of a transmission device disposed between the camshaft and the high-pressure fuel pump.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that providing a gaseous fuel internal combustion engine with a camshaft actuated high-pressure fuel pump associated with one of a plurality of cylinders may support in pressurizing gaseous fuel to a preset pressure suitable for injecting the pressurized gaseous fuel into, for example, a pre-combustion chamber shortly prior the ignition event, for instance, at times between about 30° to about 0°, particularly 10° to about 2° crank angle before the ignition event is initiated. This may lead to an at least partially enriched portion of the air/fuel-mixture around the sparking portion of the spark plug.

The present disclosure may be further based at least in part on the realization that associating high-pressure fuel pumps with respective combustion chambers may lead to short fuel supply lines between the high-pressure fuel pumps and the associated combustion chambers. Such short fuel supply lines may be particularly preferred in applications, where safety regulations may require double-walled fuel supply lines, such as marine applications. Futher, gaseous fuel internal combustion engines may generally underly safety requirements, such that short fuel supply lines may be preferred.

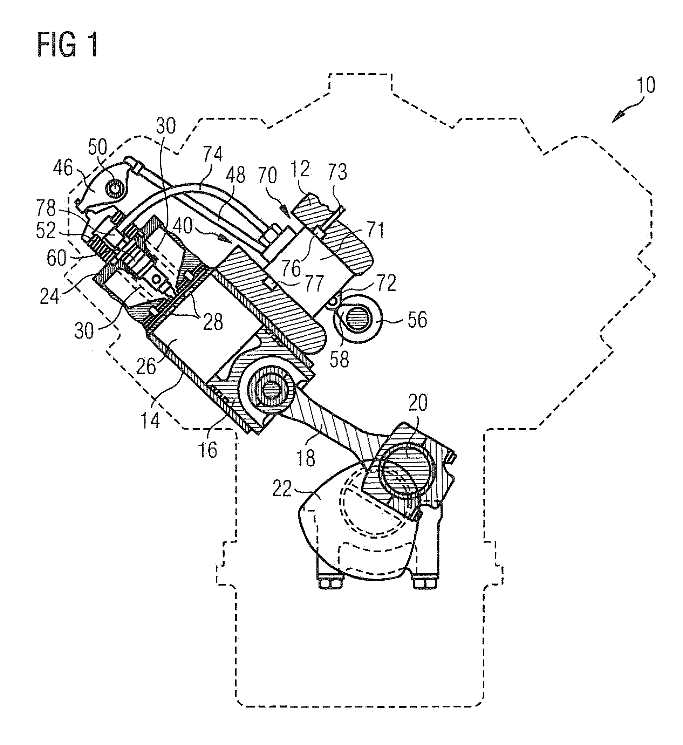

Referring now to the drawings, an exemplary embodiment of a gaseous fuel internal combustion engine 10 is illustrated in Fig. 1. The internal combustion engine 10 may include features not shown, such as air systems, cooling systems, peripheries, drivetrain components, turbochargers, etc. For the purposes of the present disclosure, the gaseous fuel internal combustion engine 10 is considered a four-stroke internal combustion engine. One skilled in the art will recognize, however, that the gaseous fuel internal combustion engine 10 may be any type of engine (for example, two-stroke) and may be of any size, with any number of cylinders, and in any configuration ("V," in-line, radial, etc.). The gaseous fuel internal combustion engine 10 may be used to power any machine or other device, including locomotive applications, on-highway trucks or vehicles, off-highway trucks or machines, earth moving equipment, generators, aerospace applications, marine applications, pumps, stationary equipment, or other engine powered applications.

The gaseous fuel internal combustion engine 10 includes an engine block 12 having a plurality of cylinders 14 (one of which is illustrated in Fig. 1). A piston 16 is slidably disposed within the cylinder 14 to reciprocate between a top-dead-center position and a bottom-dead-center position. A connecting rod 18 connects the piston 16 to an eccentric crankpin 20 of a crankshaft 22 such that reciprocating motion of the piston 16 results in rotation of the crankshaft 22.

The internal combustion engine 10 also includes a cylinder head 24 engaged with the engine block 12 to cover the cylinder 14, thereby delimiting a main combustion chamber 26. The cylinder head 24 defines intake and exhaust openings 28 that allow air/fuel mixtures to flow into the main combustion chamber 26 and exhaust gases to flow out of the main combustion chamber 26, respectively. Engine valves 30 are positioned to selectively open and close the openings 28. Each cylinder 14 may include multiple intake and exhaust openings 28.

The gaseous fuel internal combustion engine 10 further includes a series of valve actuation assemblies 40 (one of which is illustrated in Fig. 1, but is positioned behind the plane of section of Fig. 1). There may be provided multiple valve actuation assemblies 40 per cylinder 14. For example, one valve actuation assembly may be used to open and close the intake valves and another valve actuation assembly may be provided to open and close the exhaust valves.

The valve actuation assembly 40 includes a rocker arm 46. The rocker arm 46 is pivotally mounted in the cylinder head 24 and attaches to the engine valves 30 at one end and to a push rod 48 at the other end. Oscillation of the rocker arm 46 about its pivot pin 50 causes the valves 30 to move between an open position and a closed position. The valve actuation assembly 40 also includes valve springs 52 that bias the valves 30 toward the closed position (i.e. closing the intake and exhaust openings 28).

The other end of the push rod 48 engages a lifter (not shown) which engages a camshaft 56. The camshaft 56 may operably engage the crankshaft 22. The camshaft 56 is connected with the crankshaft 22 in any manner readily apparent to one skilled in the art where rotation of the crankshaft 22 results in rotation of the camshaft 56. For example, the camshaft 56 may be connected to the crankshaft 22 through a gear train (not shown).

The gaseous fuel internal combustion engine 10 also includes an ignition device 60 (also referred to as pre-combustion chamber ignition device), which is positioned within the cylinder head 24 between the valves 30. The ignition device 60 may be configured in a variety of ways. Any assembly capable of being positioned in the cylinder head 24 to support a combustion event outside of the main combustion chamber 26, and to direct the combustion into the main combustion chamber 26 may be used.

As further depicted in Fig. 1, the gaseous fuel internal combustion engine 10 includes a fuel system including, inter alia, a high-pressure fuel pump 70 fluidly interconnected between a gaseous fuel reservoir (not shown) and the ignition device 60. A first cam lobe 58 is disposed on the camshaft 56 to engage a cam roller 72 of the high-pressure fuel pump 70. The high-pressure fuel pump 70 is a camshaft actuated fuel pump including a plunger (not shown in the drawings) movably disposed within a fuel pump housing 71 and connected to the cam roller 72. One skilled in the art may recognize that the camshaft 56 may include additional cam lobes 58 to engage other high-pressure fuel pumps and other valve actuation assemblies.

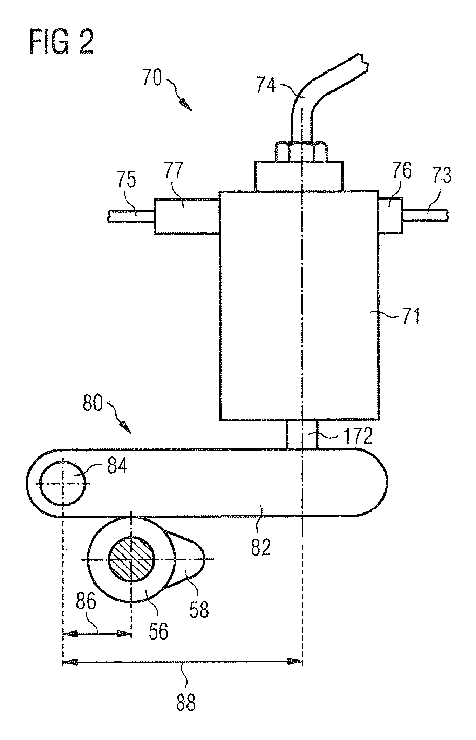

As illustrated in Fig. 1, the high-pressure fuel pump 70 is fluidly connected to the gaseous fuel reservoir via a suction line 73 and to the ignition device 60 via a supply line 74. The high-pressure fuel pump 70 may further include a drain line 75 (see Fig. 2) for re-supplying excess gaseous fuel into the gaseous fuel reservoir.

However, in some embodiments, the gaseous fuel internal combustion engine 10 may not include a pre-combusiton chamber. In such embodiments, the high-pressure fuel pump 70 may be configured to supply pressurized gaseous fuel directly into the associated main combustion chamber 26.

As further indicated in Fig. 1, the high-pressure fuel pump 70 is provided with control valves 76, 77, 78. The control valves 76, 77, 78 may be solenoid valves controlled by, for example, an engine control unit. The control valves 76, 77, 78 are configured to control a flow of gaseous fuel to and from the high-pressure fuel pump 70. Operation of the high-pressure fuel pump 70 and the associated control valves 76, 77, 78 are described in greater detail below.

In Fig. 1, the cam roller 72 of the high-pressure fuel pump 70 is configured to follow the associated cam lobe 58 of the camshaft 56. As the plunger of the high-pressure fuel pump 70 is connected with the cam roller 72 and biased towards the associated cam lobe 58, the cam roller 72 continuously contacts the associated cam lobe 58.

With respect to Fig. 2, the high-pressure fuel pump 70 of Fig. 1 is illustrated with a transmission device 80 interposed between the plunger of the high-pressure fuel pump 70 and the camshaft 56. The transmission device 80 is configured to increase the reciprocal movement of the plunger 172 protruding out of the fuel pump housing 71 and engaging the transmission device 80.

Particularly, as shown in Fig. 2, the transmission device 80 includes a lever 82 engaging the camshaft 56 (and the cam lobe 58) and the plunger 172. The lever 82 is pivotably supported by a pivot pin 84. The lever 82 is arranged such that a first lever arm 86 between an axis of rotation of the pivot pin 84 and a center of rotation of the camshaft 56 is smaller than a second lever arm 88 between the center of rotation of the pivot pin 84 and a longitudinal axis of the plunger 172. As the first lever arm 86 is smaller than the second lever arm 88, a vertical stroke of the lever 82 at a contact portion between the plunger 172 and the lever 82 is greater than a vertical stroke of the lever 82 at a contact portion between the cam lobe 58 and the lever 82. Therefore, the transmission device 80 is configured to enhance the vertical stroke generated by the cam lobe 58 of the camshaft 56 for increasing the reciprocal movement of the plunger 172.

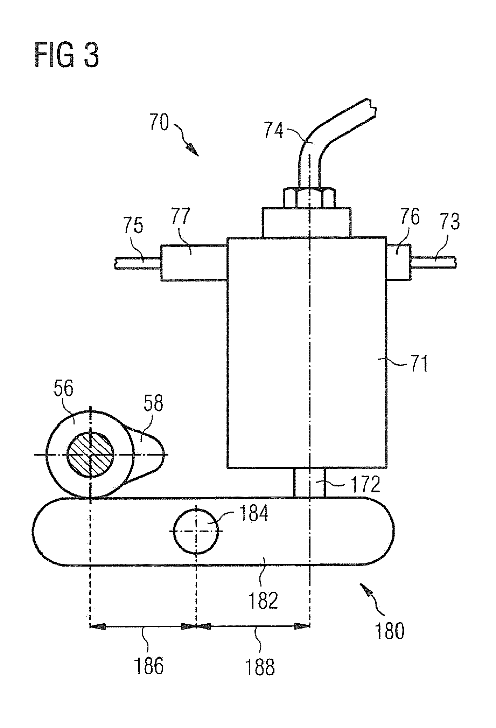

As shown in Fig. 2, both the camshaft 56 and the plunger of the high-pressure fuel pump 70 are horizontally disposed on the same side relative to the pivot pin 84. However, the camshaft 56 may be horizontally oppositely disposed with respect to the plunger 172 relative to the pivot pin 84. Such a transmission device 180 is illustrated in Fig. 3.

As shown in Fig. 3, the transmission device 180 includes, similarly to the transmission device 80 of Fig. 2, a lever 182 engaging the camshaft 56 (and the associated cam lobe 58) and the plunger 172. The lever 182 is pivotably supported by a pivot pin 184. The lever 182 is arranged such that a first lever arm 186 between an axis of rotation of the pivot pin 184 and a center of rotation of the camshaft 56 is smaller than a second lever arm 188 between the center of rotation of the pivot pin 184 and a longitudinal axis of the plunger 172. As the first lever arm 186 is smaller than the second lever arm 188, a vertical stroke of the lever 182 at a contact portion between the plunger 172 and the lever 182 is greater than a vertical stroke of the lever 182 at a contact portion between the cam lobe 58 and the lever 182. Therefore, the transmission device 180 is configured to enhance the vertical stroke generated by the cam lobe 58 of the camshaft 56 for increasing the reciprocal movement of the plunger 172.

### Industrial Applicability

In the following, operation of the gaseous fuel internal combustion engine 10 is described with respect to the drawings.

During operation of the gaseous fuel internal combustion engine 10, the crankshaft 22 continuously rotates the camshaft 56. Thus, during rotation of the camshaft 56, the cam lobe 58 actuate the high-pressure fuel pump 70, thereby reciprocally moving the plunger of the high-pressure fuel pump 70. By selectively operating the control valves 76, 77, 78, the reciprocating plunger of the high-pressure fuel pump 70 sucks in gaseous fuel through the suction line 73, pressurizes the gaseous fuel within the fuel pump housing 71 (particularly within a pressure chamber (not shown in the drawings) located within the fuel pump housing 71 of the high-pressure fuel pump 70), and supplies pressurized gaseous fuel, such as, for instance, natural gas, mine gase, biogas, or any other suitable fuel gas, to the associated ignition device 60 via the supply line 74 for pre-combustion. The high-pressure fuel pump 70 is configured to pressurize the gaseous fuel to a preset pressure greater than an actual pressure present within the pre-combustion chamber of the ignition device 60 during the compression stroke.

The maximum pressure of the air/fuel mixture during the compression stroke within the pre- chamber of the ignition device 60 or the main combustion chamber 26 may range, for instance, from about 50 bar to about 170 bar. Hence, the high-pressure fuel pump 70 may pressurize the gaseous fuel to a pressure ranging from, for example, about 50 bar to about 190 bar, particularly from about 70 bar to about 120 bar.

The pressurized gaseous fuel may be injected into the vicinity of a sparking end of a spark plug mounted to the ignition device 60 and protruding into the associated pre-combustion chamber. By supplying the pressurized gaseous fuel to the vicinity of the sparking end of the spark plug, a stratified air/fuel mixture may be present in the pre-combustion chamber that may lead to a more efficient combustion process within the pre-combustion chamber. Such stratification and enrichment of the air-fuel mixture within the pre-combustion chamber is described in EP 14 185 593 (not yet published) of the same applicant of the present disclosure.

After combusting the enrichted air/fuel mixture in the pre-combustion chamber, the flames may advance through flow transfer passages provided in the pre-combustion chamber and fluidly connecting the pre-combustion chamber to the associated (main) combustion chamber 26. The flames advanced through the flow transfer passages may then initiate the combustion process within the (main) combustion chambers 26 for driving the crankshaft 22.

Excess gaseous fuel pressurized by the high-pressure fuel pump 70 and not supplied to the pre-combustion chambers may be re-supplied into the gaseous fuel reservoir via the drain line 75 for combustion in a following engine cycle. Operation of the gaseous fuel flow may be controlled by, for example, the engine control unit configured to actuate the control valves 76, 77, 78. The control valves 76, 77, 78 may be, for example, solenoid valves, check valves, or any other known suitably valves for controlling the flow of gaseous fuel to and from the high-pressure fuel pump 70.

As indicated in Figs. 2 and 3, a transmission device 80, 180 may be interposed between the high-pressure fuel pump 70 and the camshaft 56 for increasing the stroke generated by the camshaft 56. An increased stroke of the camshaft 56 may lead to an increased stroke of the plunger of the high-pressure fuel pump 70 and, hence, to an increased pressure of the gaseous fuel pressurized by the high-pressure fuel pump 70.

Although the preferred embodiments of this invention have been described herein, improvements and modifications may be incorporated without departing from the scope of the following claims.

## Claims

1. A gaseous fuel internal combustion engine (10), comprising:
a plurality of cylinders (14) movably accommodating a piston (16) operably connected to a crankshaft (22), each cylinder (14) of the plurality of cylinders (14) defining with the associated piston (16) a combustion chamber (26) for combusting an air/fuel mixture therein;
at least one camshaft (56) operably coupled to the crankshaft (22) and including a plurality of cam lobes (58); and
at least one high-pressure fuel pump (70) associated with one of the combustion chambers (26) and operably coupled to an associated cam lobe (58) of the at least one camshaft (56), the at least one high-pressure fuel pump (70) being configured to pressurize gaseous fuel to a preset pressure and supply the pressurized gaseous fuel to the associated combustion chamber (26).

2. The gaseous fuel internal combustion engine (10) of claim 1, wherein the preset pressure is configured to be greater than an actual compressing pressure of the air/fuel mixture within the associated combustion chamber (26).

3. The gaseous fuel internal combustion engine (10) of any one of the preceding claims, wherein the preset pressure ranges from about 50 bar to about 190 bar, particularly, from about 70 bar to about 120 bar.

4. The gaseous fuel internal combustion engine (10) of any one of the preceding claims, further comprising at least one pre-combustion chamber configured to be fluidly connected to an associated main combustion chamber (26) via at least one flow transfer passage, wherein the at least one high-pressure fuel pump (70) is configured to provide the pressurized gaseous fuel to the associated pre-combustion chamber.

5. The gaseous fuel internal combustion engine (10) of any one of the preceding claims, wherein the at least one high-pressure fuel pump (70) includes at least one reciprocally movable plunger configured to be actuated and moved by the associated cam lobe (58) of the at least one camshaft (56).

6. The gaseous fuel internal combustion engine (10) of claim 5, wherein the plunger is coupled to cam roller (72) configured to engage the associated cam lobe (58), the plunger and the cam roller (72) being biased in a direction towards the associated cam lobe (58) for following the associated cam lobe (58).

7. The gaseous fuel internal combustion engine (10) of any one of claims 5 or 6, further comprising a transmission device (80; 180) configured to transmit a stroke generated by the cam lobe (58) of the at least one camshaft (56) to the plunger of the at least one high-pressure fuel pump (70).

8. The gaseous fuel internal combustion engine (10) of claim 7, wherein the transmission device (80; 180) includes a lever (82; 182) pivotally supported by a pivot pin (84; 184) and configured to increase the stroke of the cam lobe (58) of the at least one camshaft (56).

9. The gaseous fuel internal combustion engine (10) of any one of the preceding claims, further comprising:
a suction line (73) configured to fluidly connect the high-pressure fuel pump (70) to a gaseous fuel reservoir and to supply gaseous fuel to the high-pressure fuel pump (70);
a supply line (74) configured to fluidly connect the high-pressure fuel pump (70) to the associated combustion chamber (36); and/or
a drain line (75) configured to fluidly connect the high-pressure fuel pump (70) to the gaseous fuel reservoir and to re-supply excess pressurized gaseous fuel from the high-pressure fuel pump (70) into the gaseous fuel reservoir.

10. The gaseous fuel internal combustion engine (10) of claim 9, further comprising:
a first control valve (76) disposed within the suction line (73) and configured to control a flow of gaseous fuel from the gaseous fuel reservoir to the high-pressure fuel pump (70);
a second control valve (77) disposed within the supply line (74) and configured to control a flow of pressurized gaseous fuel from the high-pressure fuel pump (70) to the associated combustion chamber (26); and/or
a third control valve (78) disposed within the drain line (75) and configured to control a flow of pressurized gaseous fuel from the high-pressure fuel pump (70) to the gaseous fuel reservoir.

11. The gaseous fuel internal combustion engine (10) of any one of the preceding claims, wherein the gaseous fuel is natural gas, mine gas, biogas, and/or fuel gas.

12. A method for operating a gaseous fuel internal combustion engine (10) including a plurality of cylinders (14) and a plurality of pistons (16) operably connected to a crankshaft (22) and reciprocally accommodated within the plurality of cylinders (14), the plurality of cylinders (14) and the plurality of pistons (16) defining a combustion chamber (26) for combusting an air/fuel mixture therein, the gaseous fuel internal combustion engine (10) further including at least one camshaft (56) operably coupled to the crankshaft (22) and including a plurality of cam lobes (58), the method comprising:
operating the internal combustion engine (10) thereby driving the crankshaft (22) and the at least one camshaft (56);
actuating and operating at least one high-pressure fuel pump (70) engaging an associated cam lobe (58) by rotational movement of the at least one camshaft (56), thereby pressurizing gaseous fuel to a preset pressure.

13. The method of claim 12, further comprising increasing a stroke generated by the at least one camshaft (56) via a transmission device (80; 180).

14. The method of any one of claims 12 or 13, wherein the at least one high-pressure fuel pump (70) includes a reciprocally movable plunger engaging an associated cam lobe (58), wherein the step of actuating and operating the at least one high-pressure fuel pump (70) includes transmitting a stroke generated by the at least one camshaft (56) into a reciprocal movement of the plunger.

15. The method of any one of claims 12 to 14, wherein the preset pressure ranges from about 50 bar to about 190 bar, particularly from about 70 bar to about 120 bar.
